(19) Europäisches Patentamt
European Patent Office
Office européen des brevets

(11) **EP 3 990 544 B1**

(12) **EUROPÄISCHE PATENTSCHRIFT**

(45) Veröffentlichungstag und Bekanntmachung des Hinweises auf die Patenterteilung:
**24.05.2023   Patentblatt 2023/21**

(21) Anmeldenummer: **20732244.7**

(22) Anmeldetag: **17.06.2020**

(51) Internationale Patentklassifikation (IPC):
*C08L 67/02* (2006.01)   *C08G 63/16* (2006.01)
*C08G 63/183* (2006.01)   *C08G 63/199* (2006.01)
*C08G 63/672* (2006.01)

(52) Gemeinsame Patentklassifikation (CPC):
(C-Sets verfügbar)
**C08L 67/02; C08G 63/16; C08G 63/183; C08G 63/199; C08G 63/672**   (Forts.)

(86) Internationale Anmeldenummer:
**PCT/EP2020/066784**

(87) Internationale Veröffentlichungsnummer:
**WO 2020/260096 (30.12.2020 Gazette 2020/53)**

(54) **MINERALVERSTÄRKTER CO-POLYESTER BLEND**

MINERAL-REINFORCED CO-POLYESTER BLEND

MÉLANGE DE COPOLYESTER RENFORCÉ PAR MINÉRAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2019   EP 19183125**

(43) Veröffentlichungstag der Anmeldung:
**04.05.2022   Patentblatt 2022/18**

(73) Patentinhaber: **Covestro Intellectual Property GmbH & Co. KG**
**51373 Leverkusen (DE)**

(72) Erfinder:
• **NOLTE, Marius**
**51065 Köln (DE)**
• **HUFEN, Ralf**
**47239 Duisburg (DE)**

(74) Vertreter: **Levpat**
**c/o Covestro AG**
**Gebäude K12**
**51365 Leverkusen (DE)**

(56) Entgegenhaltungen:
CN-A- 104 231 567      CN-A- 105 802 158
KR-A- 20190 063 016

(52) Gemeinsame Patentklassifikation (CPC): (Forts.)

    C-Sets
    **C08L 67/02, C08L 67/02, C08K 3/346**

**Beschreibung**

Die vorliegende Erfindung betrifft eine Zusammensetzung zur Erzeugung einer thermoplastischen Formmasse enthaltend Polyester und Verstärkungsstoff, ein Verfahren zur Herstellung der Formmasse und die Formmasse selbst. Die Erfindung betrifft auch die Verwendung der Formmasse zur Herstellung von Formkörpern sowie die hergestellten Formkörper.

Thermoplastische Formmassen werden in großem Umfang für eine Vielzahl von Anwendungen in nahezu allen Bereichen des täglichen Lebens eingesetzt. Insbesondere durch Mischungen verschiedener Thermoplaste sowie Zugabe von weiteren Additiven und Füllstoffen lassen sich die Eigenschaftsprofile in weiten Bereichen variieren und an die entsprechenden Bedürfnisse anpassen.

In den letzten Jahren ist zudem bei thermoplastischen Formmassen der Gesichtspunkt der Nachhaltigkeit sehr stark in den Fokus gerückt. Insbesondere für Verpackungsmaterialien und Einwegartikel wird eine biologische Abbaubarkeit der Formmassen angestrebt, um einen Beitrag zur Reduzierung von Kunststoffabfällen zu leisten.

CN106832820 offenbart einen biologisch abbaubaren Einweg-Verbundkunststoffbecher und ein Herstellungsverfahren dafür. Der Plastikbecher aus abbaubarem Einwegcompound wird aus den folgenden Rohmaterialien hergestellt: 45-55% PET, 25-35% Poly (butylensuccinat), 5-15% Stärke, 1-3% Lichtabbaubeschleuniger, 2- 6% Glasfaser, 1-3% Wärmestabilisator und 1-3% Gleitmittel. Der Plastikbecher zeichnet sich durch eine gute Hitzebeständigkeit, biologische Abbaubarkeit, einem einfachen Herstellverfahren, hoher Produktstabilität und guter Qualität aus.

CN 104231567 offenbart eine biologisch abbaubare schnellformende PET (Polyethylenterephthalat)/ PBS (Polybutylensuccinat)-Formmasse, die aus folgenden Materialien in Gewichtsteilen hergestellt wird: 100 Teile PET, 20-40 Teile PBS, 3-5 Teile Keimbildner, 2-3 Teile Härter, 15-30 Teile Glasfaser und 0,5-1 Teile Verarbeitungshilfsmittel. Die erhaltene Formmasse hat die Vorteile günstiger mechanischer Eigenschaften und eines kurzen Umformzyklus.

CN105802158 beschreibt eine korrosionshemmende und biologisch abbaubare PET-PBS-Formmasse. Die PET-PBS-Formmasse wird aus 100 Gewichtsteilen PET, 30-35 Gewichtsteilen PBS, 5-10 Teilen Epoxy-modifiziertem Alkoholester, 5-10 Teilen Nano-$TiO_2$ -modifiziertem Dihydroxylpoly-diphenylsiloxan, 3-5 Teile eines Nukleierungsmitteln, 2-3 Teile eines Weichmachers, 15-30 Teile Glasfasern und 0,5-1 Teile eines Verarbeitungshilfsmittels hergestellt. Die Formmasse weist eine gute Beständigkeit gegenüber Säuren und Basen unter Erhalt der guten Abbaubarkeit auf.

Ein anderer Aspekt der Nachhaltigkeit bezieht sich auf die Herkunft der eingesetzten Inhaltstoffe. Manche der biologisch abbaubaren Thermoplaste oder zumindest Teile der entsprechenden Molekülstruktur lassen sich auch aus nachwachsenden Rohstoffen gewinnen. Auf diese Weise kann der Verbrauch an Erdöl zur Kunststoffherstellung verringert werden.

Es ist daher wünschenswert, Zusammensetzungen zur Herstellung thermoplastischer Formmassen zu entwickeln, bei denen zumindest ein Teil der Komponenten aus nachwachsenden Rohstoffen hergestellt werden kann. Bevorzugt ist es wünschenswert, dass der Anteil an aus nachwachsenden Rohstoffen hergestellten Komponenten zumindest signifikant ist, bevorzugt mindestens 5 Gew.-%, weiter bevorzugt zumindest 15 Gew-%, am meisten bevorzugt mindestens 20 Gew.-%.

Die besondere Herausforderung bei der Entwicklung solcher Materialien liegt in der Erzeugung ausgewogener Eigenschaftsprofile, die einen Einsatz in anspruchsvollen technischen Anwendungen ermöglichen, beispielsweise im Bereich elektronischer und elektrischer Geräte, Spielzeuge, Automobilanwendungen oder anderen Konsumgütern.

Insbesondere ist es für solche Anwendungen wünschenswert, eine gute Kombination von Fließfähigkeit, Zähigkeit, Wärmeformbeständigkeit, Steifigkeit und Oberflächengüte zu erzielen. Die Zähigkeit kann beispielsweise als Schlagzähigkeit und/oder als Reißdehnung in einem Zugversuch beurteilt werden.

Eine gute Oberflächengüte bedeutet, dass ein visuell hoher Glanz erreicht wird und die Bauteile keine Schlieren aufweisen.

Bevorzugt ist es wünschenswert, dass der Zug-E-Modul mindestens 1900 N/mm² erreicht und dass die Schlagzähigkeit so hoch ist, dass die Probekörper bei Raumtemperatur nicht brechen.

Es wurde überraschenderweise gefunden, dass eine Zusammensetzung enthaltend

A) 60 bis 80 Gew.-%, bevorzugt 65 bis 72 Gew.-% eines Polyesters basierend auf Terephthalsäure und mindestens einem Dianhydrohexitol und optional weiteren Diolen,
B) 10 bis 30 Gew.-%, bevorzugt 18 bis 28 Gew.-% eines Polyesters basierend auf Bernsteinsäure und mindestens einem aliphatischen, araliphatischen oder cycloaliphatischem Diol,
C) 3 bis 12 Gew.-%, bevorzugt 4 bis 10 Gew.-%, mindestens eines mineralischen Verstärkungsstoffes auf Basis von Talk,

die vorteilhaften Eigenschaften aufweist.

In Komponente A sind die weiteren Diole bevorzugt ausgewählt aus der Gruppe bestehend aus Cyclohexandimethanol, Ethylenglykol, Butandiol, Propandiol und Tetramethylcyclobutandiol. Als Komponente C wird bevorzugt Talk eingesetzt.

Die Zusammensetzung kann weiterhin als Komponente D 0 bis 20 Gew.-%, bevorzugt 0,1 bis 10 Gew.-% Polymeradditive enthalten

Bevorzugt besteht die Zusammensetzung zu mindestens 90 Gew.-% aus den Komponenten A bis D. Besonders bevorzugt besteht die Zusammensetzung nur aus den Komponenten A bis D.

**Komponente A**

Als Komponente A enthält die Zusammensetzung einen Polyester basierend auf Terephthalsäure und mindestens einem Dianhydrohexitol (Isohexid) sowie optional weiteren Diolen.

Basierend auf Terephthalsäure und mindestens einem Dianhydrohexitol sowie optional weiteren Diolen bedeutet, dass der Polyester Struktureinheiten abgeleitet von Terephthalsäure und mindestens Dianhydrohexitol sowie optional weiteren Diolen enthält.

Die weiteren Diole sind bevorzugt ausgewählt aus der Gruppe bestehend aus Cyclohexandimethanol, Ethylenglykol, Butandiol, Propandiol und Tetramethylcyclobutandiol.

Unter den Polyestern im Sinne der vorliegenden Beschreibung sind auch solche Polyester zu verstehen, die neben Terephthalsäureresten bis zu 25 mol-% Reste weiterer Dicarbonsäuren ausgewählt aus Phthalsäure, Isophthalsäure, Naphthalin-2,6-dicarbonsäure und 4,4'-Diphenyldicarbonsäure enthalten.

Ist der Anteil an Terephthalsäureresten zu klein, können physikalische Eigenschaften, Wärmeformbeständigkeit und Chemikalienbeständigkeit beeinträchtigt werden.

Bevorzugt enthält der Polyester nur Struktureinheiten abgeleitet von Terephthalsäure und Isophthalsäure als Dicarbonsäure, am meisten bevorzugt nur von Terephthalsäure.

Bei der Herstellung der Polyester kann sowohl von Terephthalsäure und den weiteren genannten Säuren ausgegangen werden oder von Alkylestern oder Anhydriden der entsprechenden Säuren.

Es ist möglich und bevorzugt, dass das Dianhydrohexitol aus nachwachsenden Rohstoffen wie beispielsweise natürlich vorkommenden Zuckeralkohol hergestellt wird.

Als Dianhydrohexitol wird weiterhin bevorzugt Isosorbid eingesetzt. Dadurch werden ebenfalls die Wärmeformbeständigkeit und die Chemikalienbeständigkeit günstig beeinflusst.

Bevorzugt ist die Komponente A ein Polyester basierend auf Terephthalsäure und einer Mischung aus Isosorbid, Cyclohexandimethanol und Ethylenglykol.

Die Diolkomponente kann dabei 5 bis 60 mol-% Isosorbid und 5 bis 80 mol-% Cyclohexandimethanol enthalten, jeweils bezogen auf die Diolkomponente. Die verbleibenden Anteile sind dann abgeleitet von Ethylenglykol.

Die Herstellung der Polyester gemäß Komponente A ist bekannt. Sie kann durch Veresterung in Gegenwart eines Katalysators wie beispielsweise einer Zinkverbindung mit anschließender Polykondensation erfolgen. Dabei kann ein Vakuum angelegt werden und die Reaktion kann beispielsweise bei einer Temperatur zwischen 150°C und 300°C durchgeführt werden.

Bei der Polykondensation können weitere Katalysatoren enthaltend Titan, Germanium, Zinn, Aluminium oder Antimon sowie Mischungen aus unterschiedlichen Katalysatoren eingesetzt werden.

Die Reaktion kann kontinuierlich oder diskontinuierlich durchgeführt werden. Die Dosierung der Rohstoffe kann separat erfolgen oder es kann eine Vormischung vorgenommen werden.

Die Polyester gemäß Komponente A weisen ein gewichtsgemitteltes Molekulargewicht $M_w$ von bevorzugt 10 bis 100 kg/mol auf, bspw. gemessen mittels Gelpermeationschromatographie in 1,1,1,3,3,3-Hexafluor-2-propanol in einer Konzentration von 1 g/L mit Polyethylenterephthalat als Standard.

Weiterhin weisen die Polyester bevorzugt eine Schmelze-Volumenfließrate (MVR) von 3-30 $cm^3$/10 min, bevorzugt von 5 bis 20 $cm^3$/10 min, jeweils gemessen nach ISO 1133 (2012) bei 240°C und einer Belastung von 5 kg auf

Die Herstellung eines Polyesters gemäß Komponente A wird beispielsweise in EP 2 955 204 B1 beschrieben.

**Komponente B**

Als Komponente B enthält die erfindungsgemäß einen weiteren Polyester oder Mischungen aus weiteren Polyestern.

Die Polyester gemäß Komponente B sind Reaktionsprodukte aus Bernsteinsäure oder ihren reaktionsfähigen Derivaten und aliphatischen, cycloaliphatischen oder araliphatischen Diolen und Mischungen dieser Reaktionsprodukte. Dabei ist es auch möglich, dass ein Teil der Bernsteinsäure durch eine andere Säure ersetzt wird.

Bevorzugte Polyester lassen sich aus Bernsteinsäure (oder ihren reaktionsfähigen Derivaten) oder aus Mischungen aus Bernsteinsäure und bis zu 20 Mol.% Reste anderer aromatischer Dicarbonsäuren mit 8 bis 14 C-Atomen oder aliphatischer Dicarbonsäuren mit 4 bis 12 C-Atomen wie Reste von Phthalsäure, Isophthalsäure, Naphthalin-2,6-dicarbonsäure, 4,4'-Diphenyldicarbonsäure, Adipin-, Sebacinsäure, Azelainsäure, Cyclohexandiessigsäure, Cyclohexandicarbonsäure und aliphatischen Diolen mit 2 bis 10 C-Atomen, beispielsweise Ethandiol, Propylenglycol, Butandiol oder Pentandiol nach bekannten Methoden wie Kondensationspolymerisation von Dicarbonsäureverbindungen oder funktionalen Derivaten wie Anhydriden und Chloriden einerseits und Diolen andererseits herstellen. Die Kondensationspolymerisation kann in Lösung, Schmelze oder fester Phase, oder in einer Kombination von Reaktionsschritten in verschiedenen Phasen durchgeführt werden.

In einer weiteren Ausführungsform ist das Polyesterpolymer ein aliphatisches Polyalkylensuccinat. In noch einer weiteren Ausführungsform ist das Polyesterpolymer ausgewählt aus der Gruppe bestehend aus Polyethylensuccinat, Polyethylensuccinat-co-adipat, Polyethylensuccinat-coterephthalat, Polybutylensuccinat, Polybutylensuccinat-co-adipat und Polybutylensuccinat-coterephthalat.

Besonders bevorzugt sind Bernsteinsäureester, die allein aus Bernsteinsäure oder ihren reaktionsfähigen Derivaten (z.B. Dimethylestem oder Anhydriden) und einem Diol hergestellt werden.

In einer bevorzugten Ausführungsform sind Diole der vorliegenden Erfindung aliphatische Diole. In einer weiter bevorzugten Ausführungsform sind die Diole Alkandiole mit 2 bis 10 C Atomen. Besonders bevorzugt sind Diole ausgewählt aus der Gruppe, die Ethandiol, Propandiol, Butandiol und Pentandiol umfasst, wobei Butandiol am meisten bevorzugt ist. In der am meisten bevorzugten Ausführungsform wird ein Polyester aus Bernsteinsäure und Butandiol verwendet.

In einer bevorzugten Ausführungsform werden zur Erhöhung des Molekulargewichts Kopplungsmittel eingesetzt. Beispiele für solche Kopplungsmittel sind 2,4-toluylen-diisocyanat, eine Mischung von 2,4-toluylen-diisocyanat und 2,6-toluylen-diisocyanat, diphenylmethandiisocyanat, 1,5-naphthylen-diisocyanat, xylylen- diisocyanat, hydriertes xylylen-diisocyanat, hexamethylen-diisocyanat und isophoron-diisocyanat. Bevorzugt werden hexamethylen-diisocyanat und isophoron-diisocyanat benutzt

Die Herstellung der erfindungsgemäßen Polyester ist beispielsweise in EP 0707047 A2 beschrieben.

Die Bernsteinsäureester können durch Einbau relativ kleiner Mengen 3- oder 4-wertiger Alkohole oder 3- oder 4-wertiger Carbonsäure, wie sie z.B. in der DE 1900270 A1 und der US 3 692 744 (A) beschrieben sind, verzweigt werden. Beispiele für bevorzugte Verzweigungsmittel sind Trimesinsäure, Trimellitsäure, Trimethylolethan, Trimethylolpropan und Pentaerythrit. Besonders bevorzugt als Verzeigungsmittel ist Trimethylolpropan, am meisten bevorzugt 1,1,1-Trimethylolpropan. Es ist ratsam, nicht mehr als 1 Gew.-% des Verzweigungsmittels, bezogen auf den Polyester, zu verwenden

Die vorzugsweise verwendeten Bernsteinsäureester weisen gewichtsgemittelte Molekulargewichte $M_w$ von 10 bis 1500 kg/mol (bestimmt durch Gel-Permeatationschromatographie gegen Polystyrol als Referenz, Lösungsmittel Dichlormethan, Konzentration 6 g/l), bevorzugt von 15 bis 750 kg/mol, noch weiter bevorzugt von 40 bis 500 kg/mol und besonders bevorzugt von 80 bis 400 kg/mol auf.

Weiterhin weisen die Polyester gemäß Komponente B bevorzugt eine Schmelze-Volumenfließrate (MVR) von 3-30 cm$^3$/10 min, weiter bevorzugt von 5 bis 20 cm$^3$/10 min , jeweils gemessen nach ISO 1133 (2012) bei 240°C und einer Belastung von 5 kg auf.

Als Säurekomponente eingesetzte Bernsteinsäure kann aus biologischen Quellen stammen, d.h. aus nachwachsenden Rohstoffen gewonnen sein, z.B. durch Fermentation von Glucose oder aus Hydrolysaten von Biomasse. Eine solche Bernsteinsäure ist bevorzugt.

In einer besonders bevorzugten Ausführungsform ist der Polyester ein Polybutylensuccinat, das ein gewichtsgemittelten Molekulargewicht von 80 bis 400 kg/mol (bestimmt durch Gel-PermeatationsChromatographie gegen Polystyrol als Referenz) aufweist.

Bei der Herstellung wird initial üblicherweise der entsprechende Dicarbonsäurediester in einer Veresterungs- oder Umesterungsreaktion bei Temperaturen von ca. 150 °C bis 300 °C gebildet, der dann bei steigender Temperatur und vermindertem Druck polykondensiert wird, wobei die entsprechenden Hydroxyverbindungen und/oder Wasser abgespalten werden. Die letzten Stufen der Reaktion werden allgemein im Hochvakuum (<10mm Quecksilbersäule) durchgeführt, um ein Polyesterpolymer mit hohem Molekulargewicht darzustellen.

Beide Reaktionsschritte können optional unter Verwendung von Veresterungskatalysatoren und/oder Umesterungskatalysatoren und/oder Polykondensationskatalysatoren durchgeführt werden. Gebräuchliche Katalysatoren umfassen Ti-, Zr-, Sn-, und Sb-Verbindungen für die Veresterung, Mn-, Co- und Zn-Verbindungen für die Umesterung, und Sb-, Ti-, Pb-, Ge-, Zn- und Sn-Verbindungen für die Polykondensation, wobei die Verbindungen im allgemeinen ausgewählt sind aus der Gruppe, die Oxide, Alkoholate, Acetate und Carboxylate umfasst. Der Metallgehalt im Katalysator beträgt üblicherweise zwischen 20 und 500 ppm, bezogen auf 100 Gewichtsteile Polyesterpolymer.

Vorzugsweise hat die Komponente B eine Glasübergangstemperatur -50°C bis 90°C, besonders bevorzugt -45°C bis 0°C. Die Komponente B besitzt vorzugsweise einen Schmelzpunkt von 80°C bis 260°C, weiter bevorzugt von 85°C bis 180°C und noch weiter bevorzugt von 90°C bis 125°C.

Die Bestimmung der Glasübergangstemperatur erfolgt nach DIN 53765 bei einer Heizrate von 20 K mit Stickstoffschutzgas, wobei die Glasübergangstemperatur als Schnittpunkt der Mittellinie zwischen den extrapolierten Basislinien vor und nach dem Glasübergang der Messkurve bestimmt wird.

## Komponente C

Bei der Komponente C handelt es sich um einen mineralischen Verstärkungsstoff auf Basis von Talk.

Als mineralische Verstärkungsstoffe auf Basis von Talk im Sinne der Erfindung kommen alle teilchenförmigen Verstärkungsstoffe infrage, die der Fachmann mit Talk bzw. Talkum verbindet. Ebenfalls kommen alle teilchenförmigen Verstärkungsstoffe, die kommerziell angeboten werden und deren Produktbeschreibungen als charakterisierende Merkmale die Begriffe Talk bzw. Talkum enthalten, in Frage.

Es können auch Mischungen verschiedener mineralischer Verstärkungsstoffe auf Basis von Talk zum Einsatz kommen.

Erfindungsgemäß sind mineralische Verstärkungsstoffe, die einen Gehalt an Talk nach DIN 55920 (Version von 2006) von größer 80 Gew.-%, bevorzugt größer 95 Gew.-% und besonders bevorzugt größer 98 Gew.-%, bezogen auf die Gesamtmasse an Füllstoff aufweisen.

Unter Talk wird ein natürlich vorkommender oder synthetisch hergestellter Talk verstanden.

Bei reinem Talk handelt sich um ein Silikat mit Schichtstruktur.

Unter Talk wird ein natürlich vorkommender oder synthetisch hergestellter Talk verstanden.

Die als Komponente E zum Einsatz kommende Talksorten zeichnen sich aus durch eine besonders hohe Reinheit, gekennzeichnet durch einen MgO-Gehalt von 28 bis 35 Gew.-%, bevorzugt 30 bis 33 Gew.-%, besonders bevorzugt 30,5 bis 32 Gew.-% und einen $SiO_2$-Gehalt von 55 bis 65 Gew.-%, bevorzugt 58 bis 64 Gew.-%, besonders bevorzugt 60 bis 62,5 Gew.-%.

Die besonders bevorzugten Talktypen zeichnen sich des Weiteren durch einen $Al_2O_3$-Gehalt von kleiner als 5 Gew.-%, besonders bevorzugt kleiner als 1 Gew.-%, insbesondere kleiner als 0,7 Gew.-%, aus.

Vorteilhaft und insofern bevorzugt ist insbesondere auch der Einsatz des erfindungsgemäßen Talkes in Form von feinvermahlenen Typen mit einer mittleren Teilchengröße $d_{50}$ von 0,2 bis 10 $\mu m$, bevorzugt 0,5 bis 5 $\mu m$, weiter bevorzugt 0,7 bis 2,5 $\mu m$, und besonders bevorzugt 0,8 bis 2,0 $\mu m$.

Die mittlere Teilchengröße dso ist der Durchmesser, oberhalb und unterhalb dessen jeweils 50 Gew.-% der Teilchen liegen. Es können auch Mischungen von Talk-Typen eingesetzt werden, die sich in ihrer mittleren Teilchengröße dso unterscheiden.

Die erfindungsgemäß einzusetzenden Talktypen haben bevorzugt eine obere Teilchen- bzw. Korngröße $d_{97}$ kleiner 50 $\mu m$, bevorzugt kleiner 10 $\mu m$, besonders bevorzugt kleiner 6 $\mu m$ und insbesondere bevorzugt kleiner 2,5 $\mu m$. Die $d_{97}$- und $d_{50}$-Werte des Talks werden nach Sedimentationsanalyse mit Sedigraph 5100 (Micromeritics GmbH, Erftstrasse 43, 41238 Mönchengladbach, Deutschland) nach ISO 13317-1 und ISO 13317-3 (Version von 2000) bestimmt.

Der Talk kann oberflächenbehandelt, z.B. silanisiert sein, um eine bessere Verträglichkeit mit dem Polymer zu gewährleisten. Der Talk kann beispielsweise mit einem Haftvermittlersystem auf Basis funktionalisierter Silane ausgerüstet sein.

Im Hinblick auf die Verarbeitung der Zusammensetzung und der daraus hergestellten Formmassen ist auch der Einsatz kompaktierten Talks vorteilhaft.

Der eingesetzte Talk kann bedingt durch die Verarbeitung zur Formmasse bzw. zu Formkörpern in der Formmasse bzw. im Formkörper einen kleineren $d_{97}$- bzw. $d_{50}$-Wert aufweisen, als in der ursprünglich eingesetzten Form.

## Komponente D

Als Komponente D kann die erfindungsgemäße Zusammensetzung ein oder mehrere Polymeradditive enthalten, bevorzugt ausgewählt aus der Gruppe bestehend aus Flammschutzmitteln, Antidrippingmitteln, Flammschutzsynergisten, Rauchinhibitoren, Gleit- und Entformungsmitteln, Nukleiermitteln, Antistatika, Leitfähigkeitsadditiven, Stabilisatoren (z.B. Hydrolyse-, Wärmealterungs- und UV-Stabilisatoren sowie Umesterungsinhibitoren), Fließfähigkeitspromotoren, Phasenverträglichkeitsvermittlern, Schlagzähigkeitsmodifikatoren (sowohl mit als auch ohne Kern-Schale-Struktur), weiteren von Komponenten A und B verschiedenen polymeren Bestandteilen (beispielsweise funktionelle Blendpartnern), von Komponente C verschiedenen Füll- und Verstärkungsstoffen sowie Farbstoffen und Pigmenten.

In bevorzugter Ausführungsform enthält die Zusammensetzung keine weiteren Füll- und Verstärkungsstoffe.

In bevorzugter Ausführungsform enthält die Zusammensetzung mindestens ein Polymeradditiv ausgewählt aus der Gruppe bestehend aus Gleit- und Entformungsmitteln, Stabilisatoren, Fließfähigkeitspromotoren, Phasenverträglichkeitsvermittlern, weiteren Schlagzähigkeitsmodifikatoren, weiteren polymeren Bestandteilen, Farbstoffen und Pigmenten.

In bevorzugter Ausführungsform enthält die Zusammensetzung als Entformungsmittel Pentaerythrittetrastearat.

In bevorzugter Ausführungsform enthält die Zusammensetzung als Stabilisator mindestens einen Vertreter ausgewählt aus der Gruppe bestehend aus sterisch gehinderten Phenolen, organischen Phosphiten und Schwefel-basierten Co-Stabilisatoren.

In besonders bevorzugter Ausführungsform enthält die Zusammensetzung als Stabilisator mindestens einen Vertreter ausgewählt aus der Gruppe bestehend aus Octadecyl-3-(3,5-di-tert-butyl-4-hydroxyphenyl)propionat und Tris(2,4-di-tert-butylphenyl)phosphit.

In besonders bevorzugter Ausführungsform enthält die Zusammensetzung als Komponente D mindestens einen Vertreter ausgewählt aus der Gruppe bestehend aus Gleit- und Entformungsmitteln, Stabilisatoren sowie Farbstoffen und Pigmenten und ist frei von weiteren Polymeradditiven gemäß Komponente D.

**Herstellung der Formmassen und Formkörper**

Aus der erfindungsgemäßen Zusammensetzung können thermoplastische Formmassen hergestellt werden. Die thermoplastischen Formmassen können beispielsweise hergestellt werden, indem man die jeweiligen Bestandteile der Zusammensetzung in bekannter Weise vermischt und bei Temperaturen von bevorzugt 200°C bis 320°C, besonders bevorzugt bei 220 bis 290°C, ganz besonders bevorzugt bei 230°C bis 270°C in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet.

Unter Formmasse wird also das Produkt verstanden, das erhaltend wird, wenn die Bestandteile der Zusammensetzung schmelzcompoundiert und schmelzextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpem durch Tiefziehen aus zuvor hergestellten Platten oder Folien. Besonders eignen sich die erfindungsgemäßen Formmassen zur Verarbeitung in Extrusions-, Blasform- und Tiefziehverfahren.

Es ist auch möglich, die Bestandteile der Zusammensetzung direkt in eine Spritzgussmaschine oder in ein Extrusionsaggregat zu dosieren und zu Formkörper zu verarbeiten.

Beispiele für solche Formkörper, die aus der erfindungsgemäßen Zusammensetzung und Formmassen hergestellt werden können, sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen und Formmassen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

**Beispiele**

**1. Rezeptur-Komponenten**

**Komponente A-1:** Co-Polyester basierend auf ca. 52 Gew.-% Terephthalsäure, ca. 16 Gew.-% Isosorbid, ca. 25 Gew.-% Cyclohexandimethanol und ca. 7 Gew.-% Ethylenglykol mit einer Schmelze-Volumenfließrate (MVR) von ca. 13 $cm^3$/[10min]. Der MVR wird gemessen nach ISO 1133 (2012) bei einer Temperatur von 240 °C, einer Belastung von 5,00 kg und einer Vorwärmzeit von 4 Minuten, nach einer Vortrocknung für 16 h bei einer Temperatur von 110 °C in einem Umlufttrockner. Komponente A weist ein gewichtsgemitteltes Molekulargewicht $M_w$ von ca. 36 kg/mol auf, gemessen mittels Gelpermeationschromatographie in1,1,1,3,3,3-Hexafluor-2-propanol in einer Konzentration von 1 g/L mit Polyethylenterephthalat als Standard.

Komponente A ist kommerziell erhältlich als ECOZEN™ T120 (SK Chemicals).

**Komponente A-2:** Polyethylenterephthalat (z.B. PET der Fa. Invista, Deutschland) mit einer intrinsischen Viskosität von ca. 0,665 dl/g. Die spezifische Viskosität wird gemessen in Dichloressigsäure in einer Konzentration von 1 Gew.-% bei 25°C. Die intrinsische Viskosität wird aus der spezifischen Viskosität gemäß nachstehender Formel berechnet.

$$\text{Intrinsische Viskosität} = \text{Spezifische Viskosität} \times 0{,}0006907 + 0{,}063096$$

**Komponente A-3:** Polybutylenterephthalat mit einer Schmelzfließrate (MFR) von 49 g / 10min , gemessen gemäß DIN EN ISO 1133 (Version von 2012) bei 250°C und 2,16 kg Belastung.

**Komponente B:** Polyester basierend auf Bernsteinsäure und Butan-1,4-diol (Polybutylensuccinat) mit einer Schmelze-Volumenfließrate (MVR) von ca. 13 $cm^3$/[10min]. Der MVR wird gemessen nach ISO 1133 (2012) bei 240 °C, einer Belastung von 5,00 kg und einer Vorwärmzeit von 4 Minuten, nach einer Vortrocknung für 16 h bei einer Temperatur von 110 °C in einem Umlufttrockner.

Komponente B ist kommerziell erhältlich als BioPBS™ FZ91PB (PTTMCC Biochem Company Limited).

**Komponente C-1:** Talk, Jetfine™ 3CA der Firma Imerys mit einem MgO-Gehalt von 32 Gew.-%, einem SiO$z$-Gehalt von 61 Gew.-% und einem $Al_2O_3$-Gehalt von 0,3 Gew.-%, mittlere Teilchengröße d$so$ = 1,0 $\mu$m.

**Komponente C-2:** Glasfaser, CS 7968, geschnittene Kurzglasfasern der Firma Lanxess AG mit einem durchschnittlichen Faserdurchmesser von 11 $\mu$m und einer durchschnittlichen Faserlänge von 4,5 mm.

**Komponente D-1:** Irganox™ 1076 (BASF, Ludwigshafen, Deutschland)
2,6-Di-tert.-butyl-4-(octadecanoxycarbonylethyl)phenol
**Komponente D-2:** Irgafos™ 168 (BASF, Ludwigshafen, Deutschland)
Tris(2,4-di-tert-butyl-phenyl)-phosphit
**Komponente D-3:** Entformungsmittel Pentaerythrittetrastearat

### 2. Herstellung der Formmassen

Das Mischen der Komponenten erfolgte auf einem Zweiwellenextruder ZSK25 der Fa. Coperion, Werner & Pfleiderer (Stuttgart, Deutschland) bei einer Massetemperatur von ca. 250°C und einem Durchsatz von 20 kg/Stunde. Nach einer Vortrocknung für 16 Stunden bei einer Temperatur von 110 °C in einem Umlufttrockner wurden die Formkörper bei 260°C Massetemperatur und bei einer Werkzeugtemperatur von 70°C auf einer Spritzgießmaschine Typ Arburg 270 E hergestellt.

### 3. Prüfungen

**MVR:** Schmelze-Volumen-Fließrate (MVR) gemessen nach ISO 1133 (2012) bei einer Temperatur von 240 °C, einer Belastung von 5,00 kg und einer Vorwärmzeit von 4 Minuten, nach einer Vortrocknung für 16 h bei einer Temperatur von 110 °C in einem Umlufttrockner.

**Schmelzeviskosität:** Viskosität der Schmelze gemessen nach ISO 11443 (2014) Methode A2 bei einer Temperatur von 240 °C und einem Schergefälle von 1000 s$^{-1}$ nach einer Vortrocknung für 16 h bei einer Temperatur von 110 °C in einem Umlufttrockner.

**Zug-E-Modul:** Zugmodul bestimmt nach ISO 527-2 (1996) an einem Schulterstab der Abmessung 170 mm * 10 mm * 4,0 mm bei einer Prüftemperatur von 23 °C.

**Bruchdehnung:** Bruchdehnung bestimmt nach ISO 527-2 (1996) an einem Schulterstab der Abmessung 170 mm * 10 mm * 4,0 mm bei einer Prüftemperatur von 23 °C.

**Izod-Schlagzähigkeit:** Mittelwert M$_w$ der Schlagarbeit gemessen an einem Flachstab der Abmessung 80 mm * 10 mm * 4,0 mm nach ISO 180 / 1U (2013) bei einer Prüftemperatur von 23 °C.

**HDT A:** Wärmeformbeständigkeitstemperatur (HDT) gemessen nach ISO 75-2 (2013) Methode A (1.8 MPa) in Siliconöl M50 an einem Flachstab der Abmessung 80 mm * 10 mm * 4,0 mm bei einer Randfaserdehnung von 0,20 % mit einer Stützweite von 64 mm in Flachkant-Position.

**Oberflächenqualität:** Ergebnis der visuellen Beurteilung der Oberfläche von Musterplättchen der Abmessung 60 mm * 40 mm * 2 mm. Die Einordnung der Beurteilung erfolgt in zwei Kategorien: "+": Oberfläche mit hohem Glanz und keinen oder nur sehr geringen Talkum/Glasfaser-Schlieren im Angussbereich.

"-": Oberfläche mit geringem Glanz und starken Talkum/Glasfaser-Schlieren im Angussbereich.

### 4. Tabelle 1; Erfindungsgemäße Beispiele und Vergleichsbeispiele (V)

| Komponente | Beispiel 1 | Beispiel 2 | V3 | V4 |
|---|---|---|---|---|
| A-1 | 78,35 | 68,35 | 78,35 | 68,35 |
| B | 13,00 | 23,00 | 13,00 | 23,00 |
| C-1 | 8,00 | 8,00 | | |

(fortgesetzt)

| Komponente | Beispiel 1 | Beispiel 2 | V3 | V4 |
|---|---|---|---|---|
| C-2 | | | 8,00 | 8,00 |
| D-1 | 0,15 | 0,15 | 0,15 | 0,15 |
| D-2 | 0,10 | 0,10 | 0,10 | 0,10 |
| D-3 | 0,40 | 0,40 | 0,40 | 0,40 |
| **Prüfung** | | | | |
| MVR [cm$^3$/[10min]] | 11 | 15 | 10 | 15 |
| Schmelzeviskosität [Pas] | 330 | 253 | 295 | 214 |
| Zug-E-Modul [N/mm$^2$] | 2341 | 2256 | 3309 | 3234 |
| Bruchdehnung [%] | 51 | 35 | 6 | 4 |
| Izod-Schlagzähigkeit [kJ/m$^2$] | Nicht gebrochen | Nicht gebrochen | 30 | 33 |
| HDT A [°C] | 93 | 90 | 101 | 97 |
| Oberflächenqualität | + | + | - | - |

**Tabelle 2; Vergleichsbeispiele**

| Komponente | V5 | V6 | V7 | V8 | V9 | V10 |
|---|---|---|---|---|---|---|
| A-1 | 86,35 | 58,35 | 51,35 | 41,35 | 72,82 | 63,09 |
| B | 5,00 | 33,00 | 40,00 | 50,00 | 24,53 | 21,26 |
| C-1 | 8,00 | 8,00 | 8,00 | 8,00 | 2,00 | 15,00 |
| D-1 | 0,15 | 0,15 | 0,15 | 0,15 | 0,15 | 0,15 |
| D-2 | 0,10 | 0,10 | 0,10 | 0,10 | 0,10 | 0,10 |
| D-3 | 0,40 | 0,40 | 0,40 | 0,40 | 0,40 | 0,40 |
| **Prüfung** | | | | | | |
| MVR [cm$^3$/[10min]] | 11 | 21 | 31 | 32 | 18 | 13 |
| Schmelzeviskosität [Pas] | 457 | 200 | 169 | 156 | 226 | 246 |
| Zug-E-Modul [N/mm$^2$] | 2522 | 2065 | 1961 | 1772 | 1737 | 2945 |
| Bruchdehnung [%] | 41 | 24 | 8 | 7 | >100 | 17 |
| Izod-Schlagzähigkeit [kJ/m$^2$] | Nicht gebrochen | 140 | 86 | 66 | Nicht gebrochen | 130 |
| HDT A [°C] | 97 | 88 | 87 | 85 | 90 | 94 |
| Oberflächenqualität | - | + | + | + | + | + |

**Tabelle 3; Vergleichsbeispiele**

| Komponente | V11 | V12 | V13 | V14 |
|---|---|---|---|---|
| A-2 | 78,35 | 68,35 | | |
| A-3 | | | 78,35 | 68,35 |
| B | 13,00 | 23,00 | 13,00 | 23,00 |
| C-1 | 8,00 | 8,00 | 8,00 | 8,00 |
| D-1 | 0,15 | 0,15 | 0,15 | 0,15 |

(fortgesetzt)

| Komponente | V11 | V12 | V13 | V14 |
|---|---|---|---|---|
| D-2 | 0,10 | 0,10 | 0,10 | 0,10 |
| D-3 | 0,40 | 0,40 | 0,40 | 0,40 |
| **Prüfung** | | | | |
| MVR [cm$^3$/[10min]] | Nicht gemessen | Nicht gemessen | 87 | 92 |
| Schmelzeviskosität [Pas] | 104 (270°C) | 85 (270°C) | 143 | 122 |
| Zug-E-Modul [N/mm$^2$] | 3415 | 3096 | 2808 | 2602 |
| Bruchdehnung [%] | 6 | 7 | 3 | 4 |
| Izod-Schlagzähigkeit [kJ/m$^2$] | 56 | 62 | 33 | 34 |
| HDT A [°C] | 74 | 75 | 147 | 141 |
| Oberflächenqualität | - | - | + | + |

Die erfindungsgemäßen Beispiele und Vergleichsbeispiele zeigen, dass nur mit den erfindungsgemäßen Zusammensetzungen das gewünschte Eigenschaftsprofil erreicht wird.

Aus den Beispielen 1 bis V4 ergibt sich, dass durch Verwendung von Talk als Füllstoff eine besonders gute Schlagzähigkeit und eine hohe Bruchdehnung erreichen lässt, während mit einer Glasfaser diese mechanischen Eigenschaften nicht ausreichend sind. Zudem wird nur mit Talk eine hohe Oberflächengüte erreicht.

Ist der Anteil der Komponente B zu gering (V5), so ist die Oberflächengüte nicht befriedigend und die Fließfähigkeit sehr schlecht.

Ist wiederum der Anteil der Komponente B zu hoch (V6, V7, V8), so sind die Wärmeformbeständigkeit und Zähigkeit nicht ausreichend. Zusätzlich ist bei V8 die Steifigkeit sehr gering.

Ist der Anteil der Komponente C zu niedrig (V9) so wird die gewünschte Steifigkeit nicht erreicht. Bei zu hohem Anteil des Verstärkungsstoffs (V10) ist die Zähigkeit wiederum reduziert.

Wir als Komponente A ein nicht erfindungsgemäßer Polyester eingesetzt (V11 bis V14), so ist ebenfalls die Zähigkeit nicht ausreichend. Die Oberflächenqualität ist bei V11 und V12 ebenfalls beeinträchtigt.

## Patentansprüche

1. Zusammensetzung enthaltend

   A) 60 bis 80 Gew.-% eines Polyesters basierend auf Terephthalsäure und mindestens einem Dianhydrohexitol sowie optional weiteren Diolen,
   B) 10 bis 30 Gew.-% eines Polyesters basierend auf Bernsteinsäure und mindestens einem aliphatischen, araliphatischen oder cycloaliphatischem Diol,
   C) 3 bis 12 Gew.-% mindestens eines mineralischen Verstärkungsstoffes auf Basis von Talk.

2. Zusammensetzung gemäß Anspruch 1, **dadurch gekennzeichnet, dass** Komponente A ein Polyester basierend auf Terephthalsäure und Isosorbid sowie optional weiteren Diolen ist.

3. Zusammensetzung gemäß Anspruch 1 oder 2, **dadurch gekennzeichnet, dass** Komponente A ein gewichtsgemitteltes Molekulargewicht Mw gemessen mittels Gelpermeationschromatographie in 1,1,1,3,3,3-Hexafluor-2-propanol mit Polyethylenterephthalat als Standard von 10 bis 100 kg/mol aufweist.

4. Zusammensetzung gemäß einem der vorhergehenden Ansprüche, **dadurch gekennzeichnet, dass** Komponente B ein Polyester basierend auf Bernsteinsäure und Butandiol ist.

5. Zusammensetzung gemäß einem der vorhergehenden Ansprüche, **dadurch gekennzeichnet, dass** Komponente B eine Schmelze-Volumenfließrate von 5 bis 20 cm$^3$/10 min, gemessen nach ISO 1133 in der Version von 2012 bei 240°C und einer Belastung von 5 kg aufweist.

6. Zusammensetzung gemäß einer der vorhergehenden Ansprüche, **dadurch gekennzeichnet, dass** in der Komponente A Struktureinheiten abgeleitet von Isosorbid enthaltend sind und dass das Isosorbid aus nachwachsenden Rohstoffen hergestellt wird.

7. Zusammensetzung gemäß einem der vorhergehenden Ansprüche, **dadurch gekennzeichnet, dass** die Komponente A ein Polyester basierend auf Terephthalsäure und einer Mischung aus Isosorbid, Cyclohexandimethanol und Ethylenglykol ist.

8. Zusammensetzung gemäß Anspruch 7, **dadurch gekennzeichnet, dass** bei der Komponente A die Diolkomponente 5 bis 60 mol-% Isosorbid und 5 bis 80 mol-% Cyclohexandimethanol, jeweils bezogen auf die Diolkomponente, enthält.

9. Zusammensetzung gemäß einem der vorhergehenden Ansprüche, **dadurch gekennzeichnet, dass** die Komponente C Talk mit einer mittleren Teilchengröße dso von 0,8 bis 2,0 $\mu$m ist, wobei die Teilchengröße wie in der Beschreibung angegeben gemessen wird.

10. Zusammensetzung gemäß einem der vorhergehenden Ansprüche enthaltend

65 bis 72 Gew.-% der Komponente A,
18 bis 28 Gew.-% der Komponente B und
4 bis 10 Gew.-% der Komponente C.

11. Zusammensetzung gemäß einem der vorhergehenden Ansprüche weiterhin enthaltend als Komponente D 0,1 bis 10 Gew.-% mindestens eines Polymeradditivs aus der Gruppe bestehend aus Flammschutzmitteln, Antidrippingmitteln, Flammschutzsynergisten, Rauchinhibitoren, Gleit- und Entformungsmitteln, Nukleiermitteln, Antistatika, Leitfähigkeitsadditiven, Stabilisatoren Fließfähigkeitspromotoren, Phasenverträglichkeitsvermittlern, Schlagzähigkeitsmodifikatoren, sowie Farbstoffen und Pigmenten.

12. Zusammensetzung gemäß einem der vorhergehenden Ansprüche bestehend aus den Komponenten A bis D.

13. Verfahren zur Herstellung einer Formmasse, **dadurch gekennzeichnet, dass** die Bestandteile einer Zusammensetzung nach einem der Ansprüche 1 bis 12 bei einer Temperatur von 200 bis 320 °C miteinander vermischt werden.

14. Formmasse erhaltend nach einem Verfahren gemäß Anspruch 13.

15. Formkörper, erhältlich aus einer Zusammensetzung nach einem der Ansprüche 1 bis 12 oder aus einer Formmasse gemäß Anspruch 14.

**Claims**

1. Composition containing

A) 60% to 80% by weight of a polyester based on terephthalic acid and at least one dianhydrohexitol and optionally further diols,
B) 10% to 30% by weight of a polyester based on succinic acid and at least one aliphatic, araliphatic or cycloaliphatic diol,
C) 3% to 12% by weight of at least one mineral reinforcer based on talc.

2. Composition according to Claim 1, **characterized in that** component A is a polyester based on terephthalic acid and isosorbide and optionally further diols.

3. Composition according to Claim 1 or 2, **characterized in that** component A has a weight-average molecular weight Mw measured by gel permeation chromatography in 1,1,1,3,3,3-hexafluoro-2-propanol using a polyethylene terephthalate standard of 10 to 100 kg/mol.

4. Composition according to any of the preceding claims, **characterized in that** component B is a polyester based on succinic acid and butanediol.

5. Composition according to any of the preceding claims, **characterized in that** component B has a melt volume flow rate of 5 to 20 cm$^3$/10 min measured according to ISO 1133 in the 2012 version at 240°C and a loading of 5 kg.

6. Composition according to any of the preceding claims, **characterized in that** component A contains structural units derived from isosorbide and **in that** the isosorbide is produced from renewable raw materials.

7. Composition according to any of the preceding claims, **characterized in that** component A is a polyester based on terephthalic acid and a mixture of isosorbide, cyclohexanedimethanol and ethylene glycol.

8. Composition according to Claim 7, **characterized in that** in component A the diol component contains 5 to 60 mol% of isosorbide and 5 to 80 mol% of cyclohexanedimethanol, in each case based on the diol component.

9. Composition according to any of the preceding claims, **characterized in that** component C is talc having a median particle size $d_{50}$ of 0.8 to 2.0 um, wherein the particle size is measured as specified in the description.

10. Composition according to any of the preceding claims, containing

    65% to 72% by weight of component A,
    18% to 28% by weight of component B and
    4% to 10% by weight of component C.

11. Composition according to any of the preceding claims further containing as component D 0.1% to 10% by weight of at least one polymer additive from the group consisting of flame retardants, anti-drip agents, flame retardant synergists, smoke inhibitors, lubricants and demolding agents, nucleating agents, antistats, conductivity additives, stabilizers, flow promoters, phase compatibilizers, impact modifiers and dyes and pigments.

12. Composition according to any of the preceding claims consisting of components A to D.

13. Process for producing a molding compound, **characterized in that** the constituents of a composition according to any of Claims 1 to 12 are mixed with one another at a temperature of 200°C to 320°C.

14. Molding compound obtained by a process according to Claim 13.

15. Molded article obtainable from a composition according to any of Claims 1 to 12 or from a molding compound according to Claim 14.


**Revendications**

1. Composition contenant

    A) 60 à 80 % en poids d'un polyester à base d'acide téréphtalique et d'au moins un dianhydrohexitol, ainsi que d'autres diols,
    B) 10 à 30 % en poids d'un polyester à base d'acide succinique et d'au moins un diol aliphatique, araliphatique ou cycloaliphatique,
    C) 3 à 12 % en poids d'au moins un agent de renforcement minéral à base de talc.

2. Composition selon la revendication 1, **caractérisée en ce que** le composant A est un polyester à base d'acide téréphtalique et d'isosorbide ainsi qu'éventuellement d'autres diols.

3. Composition selon la revendication 1 ou 2, **caractérisée en ce que** le composant A présente une masse moléculaire moyenne en masse Mw, mesurée par chromatographie par perméation de gel dans du 1,1,1,3,3,3-hexafluoro-2-propanol, avec du poly(téréphtalate d'éthylène) en tant qu'étalon, de 10 à 100 kg/mol.

4. Composition selon l'une des revendications précédentes, **caractérisée en ce que** le composant B est un polyester à base d'acide succinique et de butanediol.

5. Composition selon l'une des revendications précédentes, **caractérisée en ce que** le composant B présente un indice de fluidité en volume de 5 à 20 cm$^3$/10 min, mesuré selon ISO1133 dans la version de 2012 à 240 °C pour une charge de 5 kg.

6. Composition selon l'une des revendications précédentes, **caractérisée en ce que** le composant A contient des motifs structuraux qui dérivent de l'isosorbide, et **en ce que** l'isosorbide est fabriqué à partir de matières premières renouvelables.

7. Composition selon l'une des revendications précédentes, **caractérisée en ce que** le composant A est un polyester à base d'acide téréphtalique et d'un mélange d'isosorbide, de cyclohexanediméthanol et d'éthylèneglycol.

8. Composition selon la revendication 7, **caractérisée en ce que**, dans le composant A, le composant diol contient 5 à 60 % en moles d'isosorbide et 5 à 80 % en moles de cyclohexanediméthanol, dans chaque cas par rapport au composant diol.

9. Composition selon l'une des revendications précédentes, **caractérisée en ce que** le composant C est un talc ayant une granulométrie moyenne $d_{50}$ de 0,8 à 2,0 $\mu$m, la granulométrie étant mesurée comme indiqué dans la description.

10. Composition selon l'une des revendications précédentes, contenant

   65 à 72 % en poids du composant A,
   18 à 28 % en poids du composant B et
   4 à 10 % en poids du composant C.

11. Composition selon l'une des revendications précédentes, contenant en outre en tant que composant D 0,1 à 10 % en poids d'au moins un additif polymère du groupe consistant en les retardateurs de flamme, les anti-gouttes, les synergiques retardateurs de flamme, les inhibiteurs de fumées, les lubrifiants et agents de démoulage, les agents de nucléation, les antistatiques, les additifs de conductivité, les stabilisants, les promoteurs de fluidité, les promoteurs de compatibilisation de phase, les modifiants choc ainsi que les colorants et pigments.

12. Composition selon l'une des revendications précédentes, constituée des composants A à D.

13. Procédé de fabrication d'un mélange à mouler, **caractérisé en ce qu'**on mélange les uns aux autres les constituants d'une composition selon l'une des revendications 1 à 12 à une température de 200 à 320 °C.

14. Mélange à mouler obtenu par un procédé selon la revendication 13.

15. Objet moulé pouvant être obtenu à partir d'une composition selon l'une des revendications 1 à 12 ou d'un mélange à mouler selon la revendication 14.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 106832820
- CN 104231567
- CN 105802158
- EP 2955204 B1
- EP 0707047 A2
- DE 1900270 A1
- US 3692744 A